# EUROPÄISCHE PATENTANMELDUNG

(11) **EP 1 273 957 A1**
(43) Veröffentlichungstag der Anmeldung: **08.01.2003**
(21) Anmeldenummer: 01116015.7
(22) Anmeldetag: 02.07.2001
(51) Int. Cl.: G02B 26/12, G06K 7/10

(54) **Optoelektronische Vorrichtung**

(71) Anmelder: Leuze electronic GmbH + Co., D-73277 Owen (DE)
(72) Erfinder: Wörner, Jörg, 73235 Weilheim/Teck (DE); Claus, Armin, 72622 Nürtingen (DE)
(74) Vertreter: Ruckh, Rainer Gerhard, Dr.

(57) **Zusammenfassung**

Die Erfindung betrifft eine optoelektronische Vorrichtung (1) zur Erfassung von definierten Kontrastmustern aufweisenden Marken mit einen Sendelichtstrahlen (8) emittierenden Sender (6), einen Empfangslichtstrahlen (10) empfangenden Empfänger (11) und eine ein motorisch angetriebenes Polygonspiegelrad (9) aufweisende Ablenkeinheit (14). Die Sendelichtstrahlen (8) und Empfangslichtstrahlen (10) zur Abtastung der Marken sind über das Polygonspiegelrad (9) geführt. Weiterhin weist die Vorrichtung eine Auswerteeinheit (5) zur Auswertung der am Empfänger (11) anstehenden Empfangssignale auf. Der Motor zum Antrieb des Polygonspiegelrades (9) weist einen als Spritzgussteil ausgebildeten, an eine Welle (15) angeformten Magneten (17) auf, welcher mit wenigstens einer Spule (16) zusammenwirkt.

## Beschreibung

Die Erfindung betrifft eine optoelektronische Vorrichtung gemäß dem Oberbegriff des Anspruchs 1.

Derartige optoelektronische Vorrichtungen werden zur Erfassung von Marken eingesetzt, welche definierte Kontrastmuster aufweisen. Insbesondere kann die optoelektronische Vorrichtung als Barcodelesegerät zum Lesen von Barcodes ausgebildet sein.

Die optoelektronische Vorrichtung weist einen Sendelichtstrahlen emittierenden Sender sowie einen Empfangslichtstrahlen empfangenden Empfänger auf. Zudem ist eine Ablenkeinheit, mit einem motorisch angetriebenen Polygonspiegelrad vorgesehen. Die Sendelichtstrahlen und die Empfangslichtstrahlen werden über das Polygonspiegelrad geführt. Durch die Drehbewegung des Polygonspiegelrads werden die Sendelichtstrahlen abgelenkt, so das diese periodisch einen Raumbereich überstreichen, in welchem sich die Marken befinden.

Bei der Abtastung der Marken werden die Sendelichtstrahlen über die Marken geführt. Entsprechend dem Kontrastmuster der Marken weisen die an diesen zurückreflektierten Empfangslichtstrahlen eine Amplitudenmodulation auf. Die entsprechend modulierten Empfangssignale am Ausgang des Empfängers werden in einer Auswerteeinheit zur Erfassung der Marken ausgewertet.

Das Polygonspiegelrad wird mittels eines Motors angetrieben, so dass das Polygonspiegelrad mit einer vorgegebenen Drehzahl eine Drehbewegung ausführt. Üblicherweise werden hierzu handelsübliche Motoren eingesetzt, in welchen eine Motorsteuerung integriert ist. Zudem weist der Motor eine Welle auf. Auf die Welle wird eine mechanische Aufnahme aufgebracht, auf deren Oberseite das Polygonspiegelrad befestigt wird. Vorzugsweise weist das Polygonspiegelrad hierzu eine Halterung auf, an welcher die Aufnahme festgeschraubt wird. Die Welle selbst wird in ein Lager eingeführt und dort mittels Befestigungseinrichtungen arretiert. Die Motorsteuerung ist über ein Kabel mit der Auswerteeinheit verbunden, die auf einer separaten Leiterplatte angeordnet ist. Zur Kontaktierung ist am Ende des Kabels ein Stecker vorgesehen, der in eine entsprechende Buchse an der Auswerteeinheit eingesteckt wird.

Nachteilig hierbei ist, dass eine derartig ausgebildete Ablenkeinheit eine Vielzahl von elektrischen und mechanischen Komponenten aufweist. Die Montage dieser Komponenten ist zeitaufwendig und stellt damit einen unerwünscht hohen Kostenfaktor bei der Fertigung der optoelektronischen Vorrichtung dar. Zudem führen die Toleranzen der einzeln gefertigten Komponenten dazu, dass Genauigkeitsprobleme bei derartig hergestellten Ablenkeinheiten auftreten. Schließlich weisen derartig ausgebildete Ablenkeinheiten eine unerwünscht große Baugröße auf.

Der Erfindung liegt die Aufgabe zugrunde, eine Ablenkeinheit für eine optoelektronische Vorrichtung der eingangs genannten Art zu schaffen, die bei möglichst geringen Fertigungskosten und geringen Fertigungstoleranzen eine möglichst geringe Baugröße aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung dient zur Erfassung von definierten Kontrastmustern aufweisenden Marken und weist einen Sendelichtstrahlen emittierenden Sender, einen Empfangslichtstrahlen empfangenden Empfänger und eine ein motorisch angetriebenes Polygonspiegelrad aufweisenden Ablenkeinheit auf. Dabei sind die Sendelichtstrahlen und Empfangslichtstrahlen zur Abtastung der Marken über das Polygonspiegelrad geführt. Weiterhin weist die erfindungsgemäße optoelektronische Vorrichtung eine Auswerteeinheit zur Auswertung der am Empfänger anstehenden Empfangssignale auf. Der Motor zum Antrieb des Polygonspiegelrades weist einen als Spritzgussteil ausgebildeten, an eine Welle angeformten Magneten auf, welcher mit wenigstens einer Spule zusammenwirkt.

Ein wesentlicher Vorteil der erfindungsgemäßen Vorrichtung besteht darin, dass die Welle mit dem daran angeformten Magneten eine äußerst kompakte und kostengünstig herstellbare Baueinheit bildet, wobei insbesondere keine zusätzlichen Adapter oder dergleichen benötigt werden, um die Welle an den Magneten zu koppeln.

Der auf diese Weise ausgebildete Motor zum Antrieb des Polygonspiegelrads ist somit mit einer geringen Anzahl von Einzelteilen rationell herstellbar und weist zudem eine äußerst kleine Baugröße auf.

Weiterhin ist vorteilhaft, dass durch die Ausbildung des Magneten als Spritzgussteil dessen Form frei vorgebbar ist. Damit kann insbesondere dessen Außenkontur derart ausgebildet sein, dass das Polygonspiegelrad direkt auf den Magneten aufgesetzt werden kann und beispielsweise durch Aufkleben fixiert werden kann.

Damit entfallen separate mechanische Mittel zur Ankopplung des Polygonspiegelrads in den Magneten. Dies führt zu einer weiteren Reduzierung der Einzelteile und damit zu einer weiteren Senkung der Montage- und Materialkosten bei der Herstellung der Ablenkeinheit. Zudem wird durch diese Bauweise die Baugröße der Ablenkeinheit weiter reduziert.

In einer besonders vorteilhaften Ausführungsform der Erfindung ist der Motor direkt auf einer Leiterplatte aufgebracht, auf welcher die Auswerteeinheit integriert ist. Die Ansteuerung des Motors, insbesondere der mit dem Magneten zusammenwirkenden Spule erfolgt daher direkt über die Auswerteeinheit.

Damit entfällt eine separate Motorsteuerung und ebenfalls eine elektrische Verbindung zwischen einer solchen Motorsteuerung und der Auswerteeinheit mittels eines Kabels und eines Steckers.

In dieser Ausführungsform sitzt die Spule des Motors sowie ein Tubus mit einem Lager zur Führung der Welle auf der Leiterplatte auf.

Zur Montage des Motors wird die Welle mit ihrem unteren Ende in eine an der Oberseite des Tubus ausmündende Lagerbohrung des Lagers eingesteckt. Dabei ist besonders vorteilhaft, dass die Welle in dem Lager nicht arretiert werden muss, wodurch auf zusätzliche mechanische Mittel zur Fixierung verzichtet werden kann.

Die Welle ist damit zwar in Längsrichtung der Lagerbohrung verschiebbar. Jedoch wird diese Bewegung durch einen Anschlag begrenzt, welcher von der Gehäusedecke des Gehäuses der optoelektronischen Vorrichtung gebildet ist. Die Gehäusedecke liegt dabei dicht oberhalb des oberen Randes der Welle, falls diese in ihrer Sollposition liegt. Wird die Welle mit dem Magneten beispielsweise durch Stöße auf die Vorrichtung in der Lagerbohrung nach oben bewegt, so wird die Welle durch den Anschlag wieder zurück in ihre Sollposition gedrückt, ohne dass dabei die Rotationsbewegung der Ablenkeinheit beeinträchtigt wird.

Diese Ausführungsform der erfindungsgemäßen Vorrichtung benötigt nur eine äußerst geringe Anzahl von mechanischen und elektronischen Einzelkomponenten und ist damit besonders kostengünstig herstellbar.

Die Erfindung wird im nachstehenden anhand der Zeichnungen erläutert. Es zeigen:
- Figur 1:: Prinzipaufbau einer als Barcodelesegerät ausgebildeten optoelektronischen Vorrichtung.
- Figur 2:: Ausführungsbeispiel einer Ablenkeinheit für die Vorrichtung gemäß Figur 1.

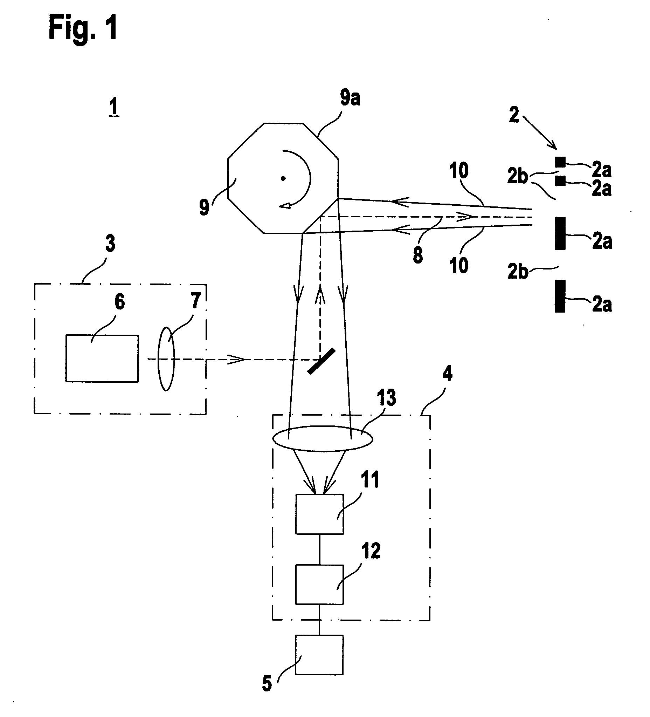

In Figur 1 ist der prinzipielle Aufbau einer optoelektronischen Vorrichtung 1 zum Erkennen von mit definierten Kontrastmustern versehenen Marken dargestellt. Prinzipiell können die Marken beliebige Folgen und Formen von aneinander angrenzenden Hell-Dunkelflächen, vorzugsweise Schwarz-Weiß-Flächen, aufweisen. Im vorliegenden Ausführungsbeispiel sind die Marken von Barcodes 2 gebildet. Die Barcodes 2 bestehen im Wesentlichen aus einer Folge von schwarzen und weißen Strichelementen 2a, 2b definierter Länge und Breite. Die optoelektronische Vorrichtung 1 ist dann als Barcodelesegerät ausgebildet.

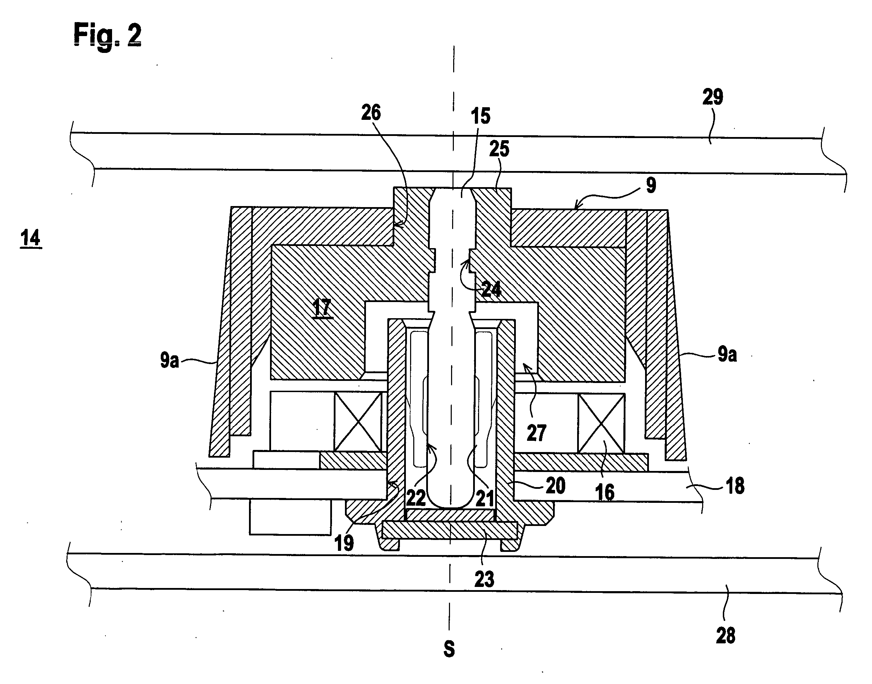

Die optoelektronische Vorrichtung 1 weist ein Sendeelement 3, ein Empfangselement 4 sowie eine Auswerteeinheit 5 auf. Das Sendeelement 3 besteht aus einem Sender 6, vorzugsweise einer Laserdiode, sowie aus einer dem Sender 6 vorgeschalteten Sendeoptik 7 zur Fokussierung der Sendelichtstrahlen 8. Die fokussierten Sendelichtstrahlen 8 werden über ein rotierendes Polygonspiegelrad 9 abgelenkt und über das zu detektierende Barcode-Symbol 2 geführt. Die Drehachse des Polygonspiegelrads 9 ist senkrecht zur in Figur 2 dargestellten Äquatorialebene des Polygonspiegelrads 9 angeordnet. Durch die Drehbewegung des Polygonspiegelrads 9 werden die Sendelichtstrahlen 8 periodisch innerhalb eines vorgegebenen Winkelbereichs innerhalb der die Abtastebene bildenden Äquatorialebene geführt. Dabei können entsprechend der Fokussierung der Sendelichtstrahlen 8 Barcodes 2 in einem vorgegebenen Distanzbereich gelesen werden.

Bei dem in Figur 1 dargestellten Ausführungsbeispiel weist das Polygonspiegelrad 9 acht Spiegelflächen 9a in Form von Facetten auf, an welchen die Sendelichtstrahlen 8 abgelenkt werden. Entsprechend der Anzahl der Facetten des Polygonspiegelrads 9 wird von den Sendelichtstrahlen 8 periodisch ein Winkelbereich von Δα = 90° überstrichen, wobei die Abtastebene, in der die Sendelichtstrahlen 8 geführt sind, entsprechend der Anordnung gemäß Figur 1 in der Äquartorialebene des Polygonspiegelrades 9 liegt.

Die vom Barcode 2 reflektierten Empfangslichtstrahlen 10 werden über das Polygonspiegelrad 9 zum Empfangselement 4 gerührt. Das Empfangselement 4 besteht aus einem Empfänger 11, der von einer Fotodiode gebildet ist und in dem die Empfangslichtstrahlen 10 in ein elektrisches Empfangssignal gewandelt werden. Dem Empfänger 11 ist ein Verstärker 12 nachgeschaltet. Zur Verbesserung der Nachweisempfindlichkeit ist dem Empfangselement 4 eine Empfangsoptik 13 vorgeschaltet.

Das am Ausgang des Empfangselement 4 anstehende Empfangssignal wird der Auswerteeinheit 5 zugeführt.

Entsprechend dem Kontrastmuster des Barcodes 2 weisen die an diesem reflektierten Empfangslichtstrahlen 10 eine Amplitudenmodulation auf. Das durch die Empfangslichtstrahlen 10 am Ausgang des Empfängers 11 anstehende Empfangssignal weist eine entsprechende Amplitudenmodulation auf. In der Auswerteeinheit 5 wird anhand der Amplitudenmodulation des Empfangssignals das Kontrastmuster des Barcodes 2 rekonstruiert.

Figur 2 zeigt ein Ausführungsbeispiel einer Ablenkeinheit 14, deren Bestandteil das Polygonspiegelrad 9 gemäß Figur 1 ist. Zudem umfasst die Ablenkeinheit 14 einen Motor, mittels dessen das Polygonspiegelrad 9 angetrieben wird, so dass dieses mit einer vorgegebenen Drehzahl eine Drehbewegung ausführt. Dieser Motor umfasst eine Welle 15, an der das Polygonspiegelrad 9 drehbar gelagert ist, sowie eine Spule 16 und einen mit dieser zusammenwirkenden Magneten 17.

Der Motor ist auf einer Leiterplatte 18 angeordnet, auf welcher die Auswerteeinheit 5 integriert ist. Die Ansteuerung des Motors erfolgt direkt über die Auswerteeinheit 5, welche über die Leiterplatte 18 unmittelbar an den Motor gekoppelt ist. Dadurch kann auf separate elektronische Bauteile und Adapter zur Motorsteuerung verzichtet werden.

In der Leiterplatte 18 ist eine Bohrung 19 vorgesehen. In dieser Bohrung 19 ist ein Tubus 20 gelagert, der von der Leiterplatte 18 senkrecht hervorsteht. Der Tubus 20 besteht aus einem hohlzylindrischen Kunststoffteil, dessen Oberseite und Unterseite offen sind. Alternativ kann der Tubus 20 aus Metall bestehen.

Im Innern des Tubus 20 ist ein Lager 21 an der Innenwand des Tubus 20 fixiert. Das Lager 21 dient zur Aufnahme der Welle 15 und verläuft in Längsrichtung des Tubus 20 entlang dessen Symmetrieachse S. Das vorzugsweise als Gleitlager, Kugellager oder Rollenlage ausgebildete Lager 21 weist eine zentrale Lagerbohrung 22 auf, welche in Längsrichtung des Tubus 20 symmetrisch zur Symmetrieachse S des Tubus 20 verläuft. Die Lagerbohrung 22 mündet mit ihrem oberen Ende an der offenen Oberseite des Tubus 20 aus. Die Unterseite des Tubus 20 ist mit einem Bodenteil 23 abgeschlossen, welches in einer horizontalen Ebene parallel zur Ebene der Leiterplatte 18 verläuft.

Der Magnet 17 ist als Spritzgussteil ausgebildet und an die Welle 15 angeformt. Das Spritzgussteil besteht aus gießfähigem Material, beispielsweise aus einem Kunststoff, welchem magnetische Materialien wie zum Beispiel Eisen oder dergleichen in fein verteilter Form beigemischt sind.

Wie aus Figur 2 ersichtlich ist der Magnet 17 an den oberen Teil der Welle 15 angeformt. Um eine sichere Fixierung des Magneten 17 an der Welle 15 zu erhalten, weist diese eine in Umfangsrichtung verlaufende Ausnehmung 24 auf, in welche das den Magneten 17 bildende gießfähige Material eingespritzt ist.

Der Magnet 17 bildet ein die Welle 15 umschließendes, rotationssymmetrisches Formteil, auf dessen Oberseite und dessen Seitenfläche das Polygonspiegelrad 9 aufsitzt. Dabei ist die Oberseite des Magneten 17 im Wesentlichen von einer ebenen, kreisscheibenförmigen Fläche gebildet. Die Seitenfläche des Magneten 17 weist die Form einer zylindrischen Mantelfläche auf.

Von der ebenen Oberseite des Formteils steht ein im Wesentliches hohlzylindrisches Führungssegment 25 hervor, welches Bestandteil des Magneten 17 ist. Das Führungssegment 25 kann insbesondere auch eine konische Mantelfläche aufweisen, wobei sich der Außendurchmesser des Führungssegments 25 zu seinem oberen Rand hin verjüngt. Das Führungssegment 25 ist im Zentrum des Magneten 17 angeordnet und ist symmetrisch zu der Symmetrieachse S des rotationssymmetrischen Magneten 17 angeordnet. Das Führungssegment 25 umschließt den oberen Teil der Welle 15 und verbessert damit den Halt des Magneten 17 an der Welle 15. Die Oberseite des Führungssegments 25 schließt bündig mit der Oberseite der Welle 15 ab.

Das Polygonspiegelrad 9 besteht aus einem Kunststoffspritzteil, auf dessen äußere Mantelfläche die Spiegelflächen 9a vorzugsweise durch Aufdampfen einer lichtreflektierenden Schicht aufgebracht werden.

Das Polygonspiegelrad 9 besteht im Wesentlichen aus einem kreisförmigen Scheibensegment, von dessen Rändern nach unten Seitenwände hervorstehen, die einstückig mit dem Scheibensegment ausgebildet sind.

Die Unterseite des Scheibensegments ist an die Form der Oberseite des Magneten 17 angepasst. Die Innenseiten der Seitenwände des Polygonspiegelrades 9 umschließen einen zylindrischen Hohlraum, der an die Außenkontur des Magneten 17 angepasst ist.

Das kreisförmige Scheibensegment des Polygonspiegelrads 9 weist eine zentrale kreisförmige Bohrung 26 auf, deren Durchmesser an den Außendurchmesser des hohlzylindrischen Führungssegments 25 des Magneten 17 angepasst ist.

Zur Montage der Ablenkeinheit 14 wird das Polygonspiegelrad 9 auf den Magneten 17 aufgesetzt und an diesem festgeklebt.

Das auf diese Weise am Magneten 17 fixierte Polygonspiegelrad 9 sitzt mit der Unterseite des kreisförmigen Scheibensegments und den Innenseiten der Seitenwände formschlüssig auf dem Magneten 17 auf. Alternativ kann das Polygonspiegelrad 9 auch derart ausgebildet sein, dass zwischen den Innenseiten der Seitenwände des Polygonspiegelrads 9 und der Mantelfläche des Magneten ein Zwischenraum verbleibt. Das Führungssegment 25 des den Magneten 17 bildenden Formteils ragt durch die Bohrung 26 des kreisförmigen Scheibensegments, wobei die Ränder der Bohrung 26 dicht an dem Führungssegment 25 anliegen.

Die Welle 15, die mit dem Magneten 17 und dem daran befestigten Polygonspiegelrad 9 eine Baueinheit bildet, wird zur Montage der Ablenkeinheit 14 in die Lagerbohrung 22 des Lagers 21 eingesetzt. Wie aus Figur 2 ersichtlich sitzt im fertig montierten Zustand der Ablenkeinheit 14 das untere Ende der Welle 15 auf dem Bodenteil 23 des Tubus 20 auf.

Die Längen der Welle 15 und des Lagers 21 sind dabei derartig dimensioniert, dass zwischen dem Tubus 20 und der Spule 16 auf der Leiterplatte 18 einerseits sowie der Unterseite des Magneten 17 ein Luftspalt bleibt, so dass die Rotation der drehbeweglich gelagerten Baueinheit bestehend aus der Welle 15, dem Magneten 17 und dem Polygonspiegelrad 9 nicht behindert wird.

Um das Bauvolumen der Ablenkeinheit 14 möglichst gering zu halten, weist das den Magneten 17 bildende Formteil eine zentrale, rotationssymmetrisch ausgebildete Ausnehmung 27 auf, welche an dem unteren Rand des Formteils ausmündet. In diese Ausnehmung 27 ragt der Tubus 20. Dadurch wird trotz der durch die Bauform des Lagers 21 bedingten relativ großen Höhe des Tubus 20 dennoch eine flache und platzsparende Bauform der Ablenkeinheit 14 erhalten.

Die Seitenwände des Polygonspiegelrades 9 ragen nach unten über den Magneten 17 hervor und decken dabei die Spule 16 teilweise ab. Dadurch werden bei flacher Bauform der Ablenkeinheit 14 dennoch hinreichend große Spiegelflächen 9a zur Ablenkung der Sende- 8 und Empfangslichtstrahlen 10 erhalten.

Die optoelektronische Vorrichtung 1 und damit insbesondere auch die Ablenkeinheit 14 sind in einem Gehäuse integriert. Die Leiterplatte 18 mit dem Motor sitzt dabei auf dem Gehäuseboden 28 auf. Die Gehäusedecke 29 verläuft dicht oberhalb des oberen Randes der Welle 15.

Diese Ausführungsform der optoelektronischen Vorrichtung 1 ist deshalb besonders vorteilhaft, da in diesem Fall die Welle 15 lediglich in die Lagerbohrung 22 eingesteckt werden muss, jedoch nicht am Lager 21 fixiert werden muss.

Im Falle externer Störung wie zum Beispiel bei Auftreten von Stoßbelastungen kann zwar die Welle 15 in der Lagerbohrung 22 etwas nach oben bewegt werden. Jedoch ist diese Translationsbewegung durch die als Anschlag wirkende Gehäusedecke 29 begrenzt. Da die Gehäusedecke 29 dicht oberhalb des oberen Randes der Welle 15 verläuft, reichen bereits kleine Auslenkungen der Welle 15 aus, dass diese gegen die Gehäusedecke 29 gedrückt und durch den Rückstoß sowie durch die Anziehungskraft des Magneten wieder in ihre Ausgangslage zurückgeführt wird. Dadurch rotiert die Ablenkeinheit 14 ohne jegliche Funktionsbeeinträchtigung weiter.

### Bezugszeichenliste

- (1): Optoelektronische Vorrichtung
- (2): Barcode
- (2a): Strichelement
- (2b): Strichelement
- (3): Sendeelement
- (4): Empfangselement
- (5): Auswerteeinheit
- (6): Sender
- (7): Sendeoptik
- (8): Sendelichtstrahlen
- (9): Polygonspiegelrad
- (9a): Spiegelfläche
- (10): Empfangslichtstrahlen
- (11): Empfänger
- (12): Verstärker
- (13): Empfangsoptik
- (14): Ablenkeinheit
- (15): Welle
- (16): Spule
- (17): Magnet
- (18): Leiterplatte
- (19): Bohrung
- (20): Tubus
- (21): Lager
- (22): Lagerbohrung
- (23): Bodenteil
- (24): Ausnehmung
- (25): Führungssegment
- (26): Bohrung
- (27): Ausnehmung
- (28): Gehäuseboden
- (29): Gehäusedecke

- (S): Symmetrieachse

## Patentansprüche

1. Optoelektronische Vorrichtung zur Erfassung von definierten Kontrastmustern aufweisenden Marken mit einem Sendelichtstrahlen emittierenden Sender, einem Empfangslichtstrahlen empfangenden Empfänger, einer ein motorisch angetriebenes Polygonspiegelrad aufweisenden Ablenkeinheit, wobei die Sendelichtstrahlen und Empfangslichtstrahlen zur Abtastung der Marken über das Polygonspiegelrad geführt sind, und mit einer Auswerteeinheit zur Auswertung der am Empfänger anstehenden Empfangssignale, **dadurch gekennzeichnet, dass** der Motor zum Antrieb des Polygonspiegelrades (9) einen als Spritzgussteil ausgebildeten, an eine Welle (15) angeformten Magneten (17) aufweist, welcher mit wenigstens einer Spule (16) zusammenwirkt.

2. Optoelektronische Vorrichtung nach Anspruch 1, **dadurch gekennzeichnet, dass** der Motor auf einer Leiterplatte (18), auf welcher die Auswerteeinheit (5) integriert ist, aufsitzt.

3. Optoelektronische Vorrichtung nach Anspruch 2, **dadurch gekennzeichnet, dass** die Welle (15) in einem Lager (21) geführt umläuft, welches mit der Leiterplatte (18) verbunden ist.

4. Optoelektronische Vorrichtung nach Anspruch 3, **dadurch gekennzeichnet, dass** das Lager (21) in einem Tubus (20) liegend von der Oberseite der Leiterplatte hervorsteht.

5. Optoelektronische Vorrichtung nach einem der Ansprüche 1 ― 4, **dadurch gekennzeichnet, dass** das Lager (21) eine in axialer Richtung verlaufende, an der Oberseite des Tubus (20) ausmündende Lagerbohrung (22) aufweist, in welche der untere Teil der Welle (15) eingeführt ist.

6. Optoelektronische Vorrichtung nach Anspruch 5, **dadurch gekennzeichnet, dass** der Magnet (17) an den oberen, über das Lager (21) hervorstehenden Teil der Welle (15) angeformt ist.

7. Optoelektronische Vorrichtung nach Anspruch 6, **dadurch gekennzeichnet, dass** an dem oberen Teil der Welle (15) eine in Umfangsrichtung verlaufende Ausnehmung (24) vorgesehen ist, welche mit der den Magnet (17) bildenden Spritzgussmasse ausgefüllt ist.

8. Optoelektronische Vorrichtung nach einem der Ansprüche 1 ― 7, **dadurch gekennzeichnet, dass** der Magnet (17) ein bezüglich der Symmetrieachse (S) der Welle (15) rotationssymmetrisches Formteil bildet, auf dessen Oberseite und an dessen Seitenfläche das Polygonspiegelrad (9) aufsitzt.

9. Optoelektronische Vorrichtung nach einem der Ansprüche 1 ― 8, **dadurch gekennzeichnet, dass** das Polygonspiegelrad (9) von einem KunststoffSpritzteil gebildet ist, auf dessen Mantelflächen Spiegelflächen (9a) zur Strahlablenkung der Sende- (8) und Empfangslichtstrahlen (10) vorgesehen sind.

10. Optoelektronische Vorrichtung nach Anspruch 9, **dadurch gekennzeichnet, dass** das Polygonspiegelrad (9) aus einem kreisförmigen Scheibensegment und von dessen Rändern nach unten hervorstehenden Seitenwänden gebildet ist.

11. Optoelektronische Vorrichtung nach Anspruch 10, **dadurch gekennzeichnet, dass** das kreisförmige Scheibensegment des Polygonspiegelrades (9) auf der Oberseite des Magneten (17) aufsitzt.

12. Optoelektronische Vorrichtung nach einem der Ansprüche 8 ― 11, **dadurch gekennzeichnet, dass** das Polygonspiegelrad (9) auf den Magneten (17) aufgeklebt ist.

13. Optoelektronische Vorrichtung nach einem der Ansprüche 8 ― 12, **dadurch gekennzeichnet, dass** das den Magneten (17) bildende Formteil ein Führungssegment (25) aufweist, welches den oberen Teil der Welle (15) umschließt.

14. Optoelektronische Vorrichtung nach Anspruch 13, **dadurch gekennzeichnet, dass** die Oberseiten der Welle (15) und des Führungssegments (25) bündig aneinander anschließen.

15. Optoelektronische Vorrichtung nach einem der Ansprüche 13 oder 14, **dadurch gekennzeichnet, dass** das kreisförmige Scheibensegment des Polygonspiegelrades (9) eine zentrale Bohrung (26) mit kreisförmigem Querschnitt aufweist, durch welche das Führungssegment (25) des Magneten (17) geführt ist.

16. Optoelektronische Vorrichtung nach Anspruch 15, **dadurch gekennzeichnet, dass** die Ränder der Bohrung (26) des kreisförmigen Scheibensegments dicht an der Mantelfläche des Führungssegments (25) des Magneten (17) anliegen.

17. Optoelektronische Vorrichtung nach einem der Ansprüche 8 ― 16, **dadurch gekennzeichnet, dass** der untere Rand des den Magneten (17) bildenden Formteils in Abstand zu der Spule (16) und dem das Lager (21) aufnehmenden Tubus (20) liegt.

18. Optoelektronische Vorrichtung nach einem der Ansprüche 2 ― 17, **dadurch gekennzeichnet, dass** das Formteil eine zentrale, rotationssymmetrische Ausnehmung (27) aufweist, welche am unteren Rand des Formteils ausmündet und in welche der Tubus (20) ragt.

19. Optoelektronische Vorrichtung nach einem der Ansprüche 2 ― 18, **dadurch gekennzeichnet, dass** diese in einem Gehäuse integriert ist, wobei die Leiterplatte (18) mit dem Motor auf dem Gehäuseboden (28) aufsitzt, und wobei die Gehäusedecke (29) dicht oberhalb des oberen Randes der Welle (15) verläuft.

20. Optoelektronische Vorrichtung nach Anspruch 19, **dadurch gekennzeichnet, dass** die Welle (15) in dem Lager (21) in Längsrichtung verschiebbar geführt ist, wobei die Gehäusedecke (29) einen Anschlag für die Welle (15) bildet.
